# EUROPEAN PATENT APPLICATION

(11) **EP 2 461 370 A1**
(43) Date of publication of application: **06.06.2012**
(21) Application number: 10804140.1
(22) Date of filing: 22.02.2010
(51) Int. Cl.: H01L 31/042

(54) **SOLAR CELL MODULE**

(30) Priority: 28.07.2009 JP 2009175312
(71) Applicant: Mitsubishi Electric Corporation, Tokyo 100-8310 (JP)
(72) Inventor: SUGANUMA, Yoshiyuki, Tokyo 100-8310 (JP); SUZUKI, Issei, Tokyo 100-8310 (JP)
(74) Representative: Gleiter, Hermann
(86) International application number: PCT/JP2010/052616
(87) International publication number: WO 2011/013391

(57) **Abstract**

A photovoltaic cell module includes a flat-plate-like photovoltaic cell panel (5), which has a photovoltaic cell (2), a front face cover (3) covering the light-receiving surface of the photovoltaic cell (2), and a rear face cover (4) covering the rear face of the photovoltaic cell (2); includes a framing member (6) that has a cross-sectionally U-shaped panel holding portion (12) which sandwiches and holds the outer periphery of the photovoltaic cell panel (5) from the front side and the rear side of the photovoltaic cell panel; and includes a cable (8) that is used to draw out electric power from the photovoltaic cell (2). A cable holding member (13) is disposed to hold the cable (8) and is arranged on the panel holding portion (12), which faces the rear side of the photovoltaic cell panel (2), of at least one side of the framing member (6). As a result, it becomes easier to fasten the cable (8), thereby leading to enhancement in workability.

## Description

### Field

The present invention relates to a photovoltaic cell module that converts light energy of the sun or the like into electrical energy.

### Background

Among typical photovoltaic cell modules, the heavily-used photovoltaic cell modules come with a configuration in which a photovoltaic cell panel has a light-receiving surface with a glass laid thereon and with a plurality of electrically-connected photovoltaic cells lined up on the underside of the glass. The photovoltaic cells are sealed with a sealant, with the rear face thereof further covered with a cover. Moreover, to the photovoltaic cell panel, a cross-sectionally U-shaped framing member is attached using an adhesive agent or a cushioning material so that the outer periphery of the photovoltaic cell panel is sandwiched in the U-shaped framing member. Herein, the framing member ensures that the photovoltaic cell panel has sufficient strength, and is used while fastening the photovoltaic cell module to the roof or the roof terrace of a house. Examples of common cross-sectional shapes of such a framing member include the shape disclosed in FIG. 2 of Patent Literature 1.

Usually, in a photovoltaic power generation system, a plurality of photovoltaic cell modules is directly connected by output cables thereof while maintaining an intended voltage. Moreover, the photovoltaic cell modules are configured in parallel so as to obtain an intended amount of electrical power. Since a photovoltaic power generation system is installed under the open sky, if the cables are left unfastened, they swing in the wind and come in mechanical contact with other structural objects. That may damage the cables. Moreover, when a photovoltaic power generation system is installed on a vessel such as a ship or the like, there is also the issue of pitching/rolling and swinging of the vessel, which could lead to a contact between the cables and other objects. In such a case, the cables are at a high risk of getting damaged. Thus, while installing the photovoltaic cell modules, it is necessary to fasten the cables using the framing members of the photovoltaic cell modules or using structural objects such as mounts on which the photovoltaic cell modules are installed.

### Citation List

### Patent Literature

Patent Literature 1: Japanese Patent Application Laid-open No. 2003-282919 (FIG. 2)

### Summary

### Technical Problem

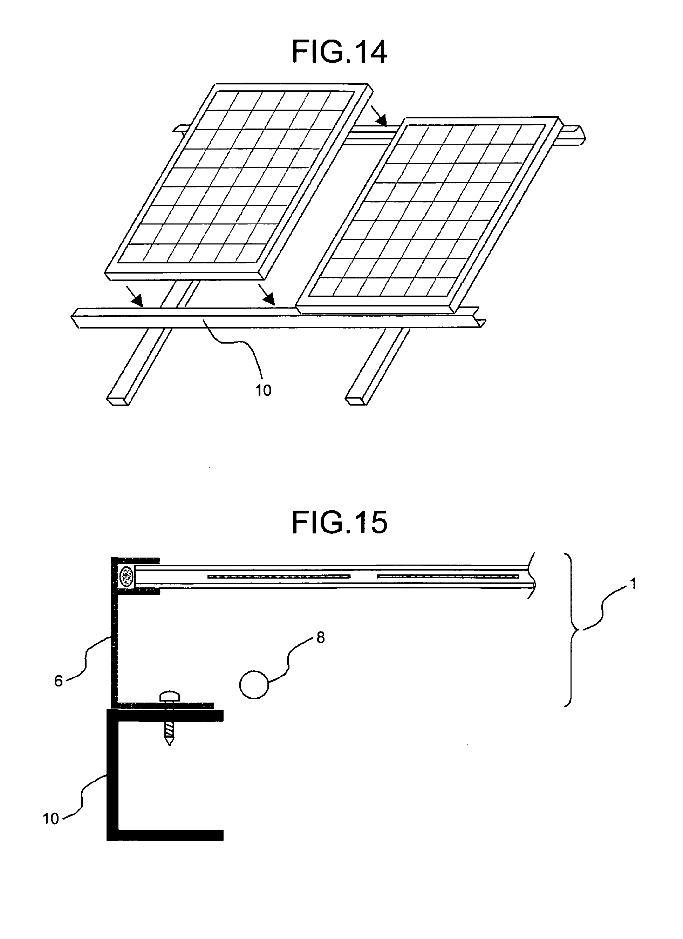

In FIG. 14 and FIG. 15, an example is illustrated in which photovoltaic cell modules are installed on a mount. Herein, the photovoltaic cell modules are lined on a mount that is placed in advanced on the roof or the roof terrace of a house. With the aim of installing the photovoltaic cell modules, the framing members thereof are fastened to the mount with screws or the like. As a technique of using the framing member to fasten the cable of a photovoltaic cell module, a hole can be formed on the lateral portion of the framing member and a fastening member such as a banding band or the like can be passed through that hole for tying the cable to the framing member. However, in the case of using a banding band to fasten the cable, the banding band firstly needs to be pulled out from the hole formed on the lateral portion of the framing member and then needs to be put back into the photovoltaic cell module from a different hole for tying the cable. For that, holes need to be formed at two different positions. Such a task has a particularly poor workability while installing a photovoltaic cell module on the roof of a house, and it takes a lot of time to perform that task.

Meanwhile, if the banding band that is pulled out of the photovoltaic cell module from the hole formed on the lateral portion of the fastening member remains exposed to direct sunlight or rain, then such a situation requires enhancement in the weather resistance of the banding band or requires lowering of the design. Moreover, when there is a need to install another photovoltaic cell module adjacent to the framing member through which the banding band is passed, the banding band that is exposed on the outside comes in the way of installing the photovoltaic cell modules close to each other. That affects the arrangement of photovoltaic cell modules.

Often, the framing member has a flange for the purpose of fixing the photovoltaic cell module to the mount. In that case, another technique of tying the cable using a banding band is also known in which the banding band is passed through a hole that is formed not on the lateral portion of the framing member but on the flange of the framing member. However, in case the flange is placed throughout its entire length on the mount; then it also becomes necessary to form a hole on the mount so that the banding band can be let through. However, such a configuration may not be feasible depending on the installation conditions for the mount.

Furthermore, another technique is also known in which the cable is fastened not to the framing member but to the mount by twisting a banding band around the mount. However, a situation may arise when the mount is not placed at the position where the banding band needs to be twisted. Thus, depending on the installation conditions for the mount, there are times when such a configuration is also not feasible. In this way, conventionally, issues such as the ones described above arise as far as fastening of a cable is concerned.

The present invention has been made in view of the abovementioned problems in the conventional technology and an object of the present invention is to provide a photovoltaic cell module that includes a framing member which enables easier fastening of cables while installing the photovoltaic cell module.

### Solution to Problem

The photovoltaic cell module according to the present invention includes: a flat-plate-like photovoltaic cell panel including a photovoltaic cell; a front face cover that covers a light-receiving surface of the photovoltaic cell; and a rear face cover that covers a rear face of the photovoltaic cell; a framing member that has a cross-sectionally U-shaped panel holding portion which sandwiches and holds an outer periphery of the photovoltaic cell panel from a front side and a rear side of the photovoltaic cell panel, and a cable that is used to draw out direct electric power from the photovoltaic cell, wherein the photovoltaic cell module further includes a cable holding member that is capable of holding the cable and is arranged on a panel holding rear face, which faces the rear side of the photovoltaic cell panel, of at least one side of the framing member.

### Advantageous Effects of Invention

According to an aspect of the present invention, a cable holding member that is capable of holding a cable is disposed on a face, which faces the rear side of a photovoltaic cell panel, on at least one side of a framing member in a photovoltaic cell module. By making use of the cable holding member, the cable can be held without difficulty, thereby leading to enhancement in workability at the time of fastening the cable.

### Brief Description of Drawings

FIG. 1 is a plan view, when viewed from the front side, of a photovoltaic cell module according to a first embodiment of the present invention.
FIG. 2 is a plan view, when viewed from the rear side, of the photovoltaic cell module according to the first embodiment of the present invention.
FIG. 3 is cross-sectional view of a framing member of the photovoltaic cell module according to the first embodiment of the present invention.
FIG. 4 is cross-sectional view of the framing member of the photovoltaic cell module according to the first embodiment of the present invention.
FIG. 5 is cross-sectional view of the framing member of the photovoltaic cell module according to the first embodiment of the present invention.
FIG. 6 is cross-sectional view of the framing member of the photovoltaic cell module according to the first embodiment of the present invention.
FIG. 7 is cross-sectional view of a cable being tied to the framing member of the photovoltaic cell module according to the first embodiment of the present invention.
FIG. 8 is cross-sectional view of the cable being tied to the framing member of the photovoltaic cell module according to the first embodiment of the present invention.
FIG. 9 is cross-sectional view of the cable being held in the framing member of the photovoltaic cell module according to a second embodiment of the present invention.
FIG. 10 is side view of the cable being held in the framing member of the photovoltaic cell module according to the second embodiment of the present invention.
FIG. 11 is rear view of the cable being held in the framing member of the photovoltaic cell module according to the second embodiment of the present invention.
FIG. 12 is cross-sectional view of the framing member of the photovoltaic cell module according to a third embodiment of the present invention.
FIG. 13 is cross-sectional view of the cable being held in the framing member of the photovoltaic cell module according to a fourth embodiment of the present invention.
FIG. 14 is a perspective view explaining an installation condition of photovoltaic cell modules according to the present invention on a mount.
FIG. 15 is a cross-sectional view explaining an installation condition of the photovoltaic cell modules according to the present invention on a mount.

### Description of Embodiments

### First embodiment

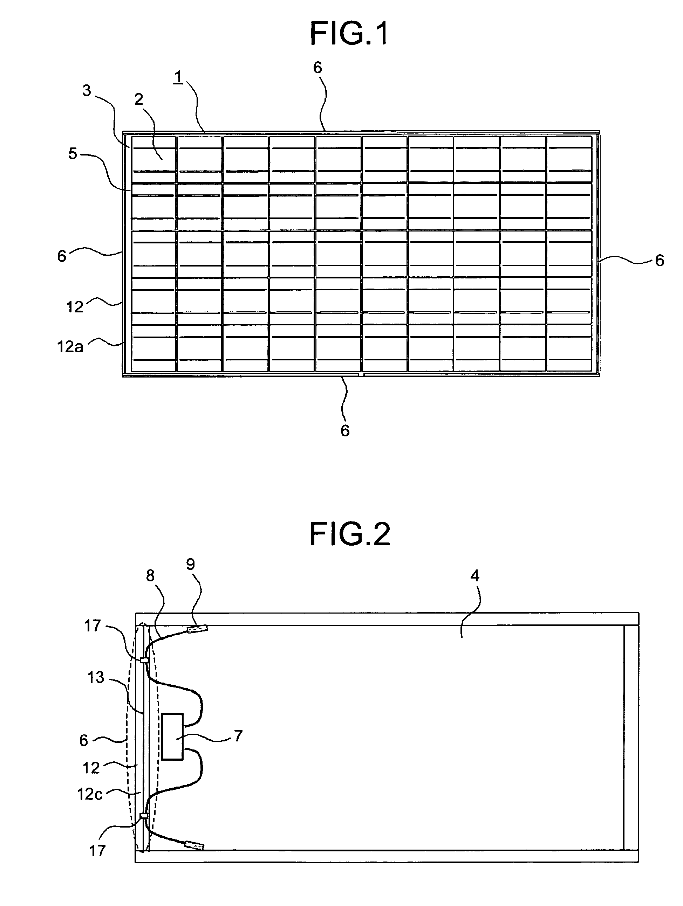

FIG. 1 is a plan view, when viewed in entirety from the front side, of a photovoltaic cell module according to a first embodiment of the present invention. In FIG. 1, a photovoltaic cell module 1 includes a photovoltaic cell panel 5, which has a plurality of photovoltaic cells 2 arranged in a matrix and sealed with a resin seal; which has a light-receiving surface covered with a translucent front face cover 3; and which has the rear side covered with a rear face cover (not illustrated). The photovoltaic cell module 1 also includes a framing member 6 that surrounds the entire outer periphery of the photovoltaic cell panel 5. The framing member 6 is fastened to the photovoltaic cell panel 5 using a butyl sealant or a silicon adhesive agent. Moreover, the framing member 6 has a flange (not illustrated), which ensures that the photovoltaic cell panel 5 has sufficient strength and which is used in fixing the photovoltaic cell panel 5 to a mount that is placed on a building such as a house or placed on the ground or on a building structure.

FIG. 2 is a plan view, when viewed from the rear side, of the photovoltaic cell module according to the first embodiment of the present invention. As illustrated in FIG. 2, the photovoltaic cell module 1 is covered on the rear side with a rear face cover 4, and includes a terminal box 7 and a cable 8 that are used in drawing out the direct-current power generated by the photovoltaic cells 2. Herein, the photovoltaic cells 2 are hard-wired to each other thereby constituting a series circuit. The positive electrode and the negative electrode of the entire series circuit are respectively connected to a plus terminal and a minus terminal (not illustrated) placed inside the terminal box 7. Moreover, the cable 8 is connected to each of the plus terminal and the minus terminal, and is drawn out of the terminal box 7. To the ends of the cable 8 are attached connectors 9. According to the polar characters of the terminals inside the terminal box 7 that are connected to the cable 8, the connectors 9 serve as a positive connector and a negative connector, respectively.

In a photovoltaic power generation system, a plurality of photovoltaic cell modules is series-connected so as to obtain an intended direct-current voltage and such series-connected photovoltaic cell modules are further configured in parallel so as to obtain an intended amount of direct-current power. In order to series-connect two photovoltaic cell modules, the connector (serving as a positive connector) that is attached to the cable of one of the photovoltaic cell modules is connected to the connector (serving as a negative connector) that is attached to the cable of the other photovoltaic cell module. In the case of series-connecting more than two photovoltaic cell modules, the abovementioned way of connection is sequentially repeated.

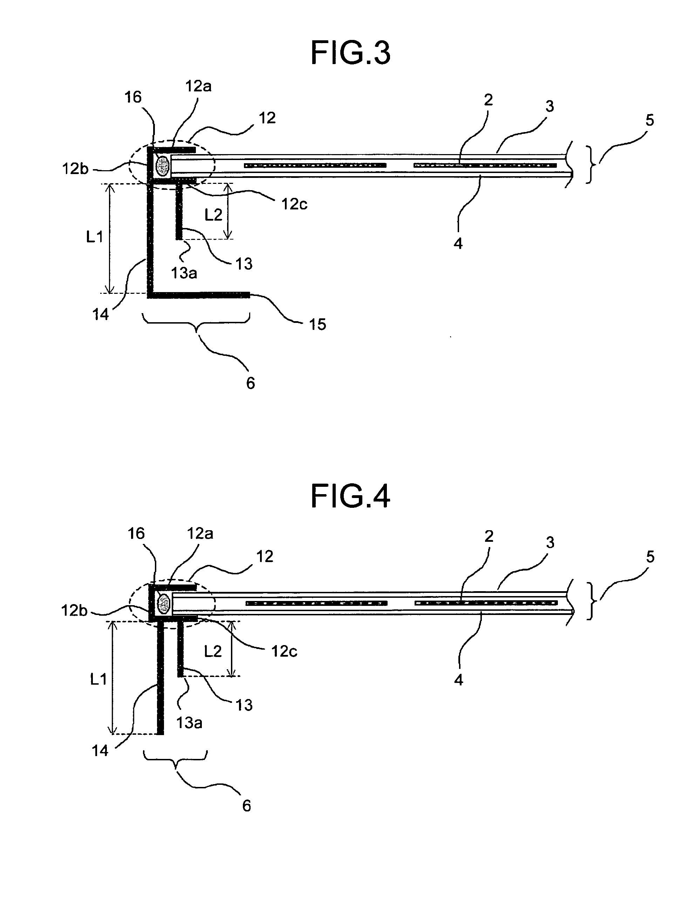

FIG. 3 to FIG. 8 are various cross-sectional views of the framing member of the photovoltaic cell module according to the first embodiment of the present invention. Firstly, the explanation is given with reference to FIG. 3. The photovoltaic cell panel 5 has a hierarchical structure, in which the photovoltaic cells 2 are arranged in plurality in a matrix, the light-receiving surface of the photovoltaic cell panel 5 is covered with the translucent front face cover 3, and the rear side of the photovoltaic cell panel 5 is covered and sealed with the rear face cover 4. The photovoltaic cell panel 5 is fastened, in a sandwiched and held manner, in a cross-sectionally U-shaped panel holding portion 12 of the framing member 6 via a cushioning material 16 such as a butyl sealant or a silicon adhesive agent. The framing member 6 is manufactured by means of extrusion molding of aluminum or the like and surrounds the entire outer periphery of the photovoltaic cell panel 5.

The panel holding portion 12 has a cross-sectional U shape, and has a panel holding front face 12a, a panel holding lateral face 12b, and a panel holding rear face 12c. From the panel holding lateral face 12b, a framing lateral portion 14 extends in the direction away from the rear side of the photovoltaic cell panel 5 (in the first embodiment, in the vertically downward direction). At the end of the framing lateral portion 14 is formed a flange 15 that extends in a substantially parallel manner to the photovoltaic cell panel 5. Thus, the framing lateral portion 14 and the flange 15 form a substantially L shape. The flange 15 ensures that the photovoltaic cell module 1 has sufficient strength, and is used in fixing the photovoltaic cell module 1 to a mount. Meanwhile, at the rear side of the panel holding rear face 12c and on the inside of the framing lateral portion 14, a cable holding member 13 is erected in a substantially parallel manner to the framing lateral portion 14 at a predetermined distance from the framing lateral portion 14. The cable holding member 13 is vertically arranged that is formed as a rib having a cross-sectional length L2 that is shorter than a cross-sectional length L1 of the framing lateral portion 14.

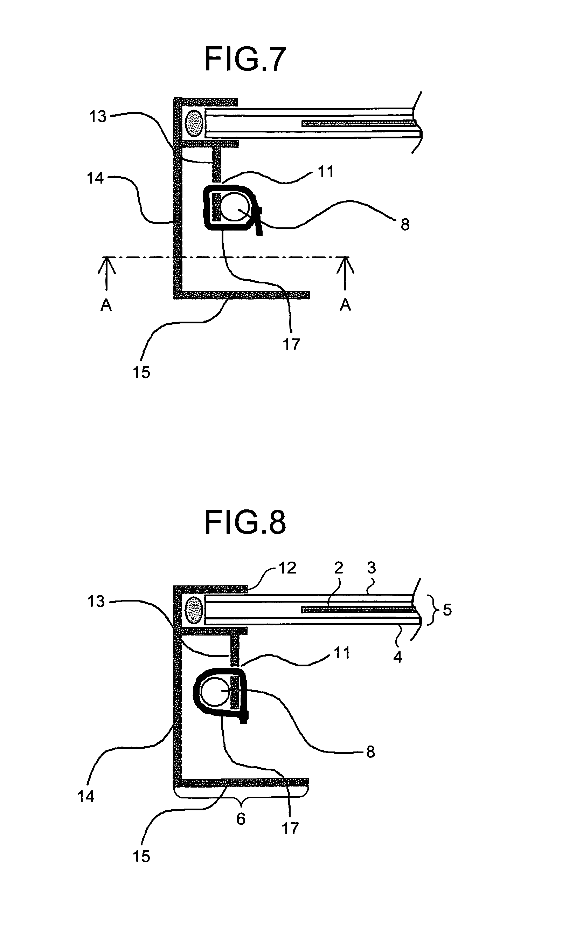

The cable holding member 13 is not a closed tube-like member closed by the panel holding rear face 12c, the framing lateral portion 14, and the flange 15. Instead, there exists a gap between the cable holding member 13 and the flange 15. Hence, as illustrated in FIG. 7, through either an opening (a pass-through slot) 11 formed in advance or a hole formed during post-processing in the cable holding member 13, and through the gap between the cable holding member 13 and the flange 15; a banding band 17 can be passed so that the cable 8 can fastened to the cable holding member 13 without difficulty. In such a configuration, the cable 8 that is fastened to the cable holding member 13 is not visible from the outer periphery of the photovoltaic cell module 1. That enables achieving enhancement in the post-installation design of the photovoltaic cell module 1. Besides, since it is not exposed to direct sunlight or rain, the banding band 17 does not deteriorate easily. For that reason, the need for using the banding band 17 of a highly weather resistant nature is eliminated.

As illustrated in FIG. 8, the cable 8 can also be fastened at a position at which it is housed in between the cable holding member 13 and the framing lateral portion 14. By implementing this method, even in the case of a photovoltaic power generation system installed on a deck roof in which the rear side surface of the photovoltaic cell modules is visible, the majority of the cable 8 remains concealed without getting exposed, thereby enabling enhancement in the design.

FIG. 4 illustrates a cross-sectional shape of the framing member in the case when the framing lateral portion 14 and the panel holding lateral face 12b are not aligned in cross-section. That is, in this case, the framing lateral portion 14 of the framing member 6 does not extend from the outer end of the panel holding rear face 12c, that is, does not extend from the position of the panel holding lateral face 12b. Rather, the framing lateral portion 14 of the framing member 6 extends from a position that is inward of the panel holding rear face 12c. With such a shape, it becomes possible to insert fingers in the level difference between the panel holding lateral face 12b and the framing lateral portion 14. For that reason, when photovoltaic cell modules are stacked on top of another, it becomes easier to take out a single photovoltaic cell module. Meanwhile, in this configuration, although the flange 15 is absent at the end of the framing lateral portion 14; the cross-sectional length L2 of the cable holding member 13 is still shorter than the cross-sectional length L1 of the framing lateral portion 14. Hence, the cable 8 that is fastened to the cable holding member 13 is not invisible from the outer periphery of the photovoltaic cell module 1. That enables achieving enhancement in the post-installation design of the photovoltaic cell module 1. Besides, since the banding band 17 is not exposed to direct sunlight or rain, the need for using the banding band 17 of a highly weather resistant nature is eliminated.

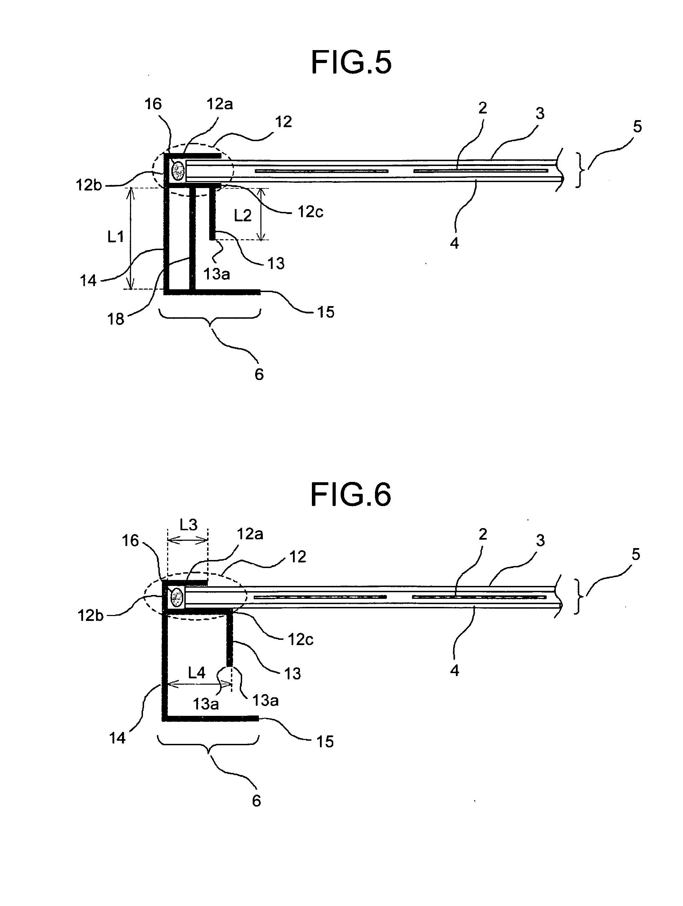

FIG. 5 illustrates a cross-sectional shape of the framing member in the case when a tube-like shape ensures that the framing member has sufficient strength. In this case, in parallel to the framing lateral portion 14 of the framing member 6, a strengthening member 18 extends from the panel holding rear face 12c up to the flange 15 thereby forming a tube-like shape. In this configuration too, as long as the cross-sectional length L2 of the cable holding module 13 is shorter than the cross-sectional length L1 of the framing lateral portion 14, the cable 8 can be fastened in exactly the same manner as explained with reference to FIG. 3.

FIG. 6 illustrates a cross-sectional shape of the framing member 6 in the case when a cross-sectional length L4 of the panel holding rear face 12c is kept longer than a cross-sectional length L3 of the panel holding front face 12a so as to strengthen the framing member. In the cross-sectional shape of the framing member 6, as is the case for H-section steel or C-section steel, when the framing member 6 receives load in the direction of the cross-section thereof; then, longer the cross-section of the framing member 6 in that direction is, greater the extent of efficiently ensuring the sufficient strength with a smaller cross-sectional area becomes. In FIG. 6, the cross-sectional length L4 of the panel holding rear face 12c, from which the cable holding member 13 protrudes, is kept longer so as to enable efficient strengthening in the direction perpendicular to the frame lateral face. Moreover, the position at which the cable holding member 13 protrudes from the panel holding rear face 12c is moved closer to the leading end of the panel holding rear face 12c so that the framing member 6 can be further strengthened with the same cross-sectional area.

If viewed from the rear face of the photovoltaic cell module 1, the condition in which the cable 8 is fastened to the cable holding member 13 as described above is same as illustrated in FIG. 2. Herein, the portion of the framing member 6 illustrated in FIG. 2 represents a cross-sectional view of A-A portion illustrate in FIG. 7. The cable 8 is fastened to the cable holding member 13 using the banding band 17.

Incidentally, the photovoltaic cell module 1 is installed under the open sky for an extended period of time. Hence, in a case when the cable 8 is fastened by pressing against a corner of the cable holding member 13 or in a case when the cable 8 makes contact with a corner portion 13a at the leading end of the cable holding member 13, the cable 8 gets damaged in the long run. Thus, in order to attach the cable 8 in such a way that it does not come in contact with the corners of the cable holding member 13, it is an effective measure to keep the cross-sectional length L2 of the cable holding member 13 equal to or greater than the diameter of the cable 8. Moreover, by making the corner portion 13a at the leading end of the cable holding member 13 to be R-shaped, the cable 8 can be further prevented from getting damaged.

### Second embodiment

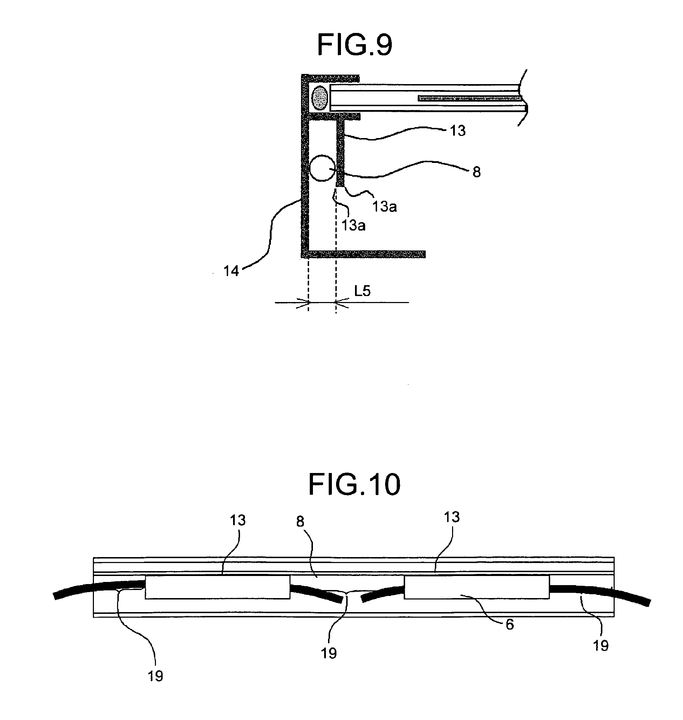

FIG. 9 is a cross-sectional view of the framing member in the photovoltaic cell module according to a second embodiment of the present invention. The following explanation is given with reference to FIG. 9. In the second embodiment, a facing distance L5 between the framing lateral portion 14 of the framing member 6 and the cable holding member 13 is kept equal to or smaller than the diameter of the cable 8. In this regard, however, the facing distance L5 is not kept extremely small as compared to the diameter of the cable 8, but is kept about equal to a diameter at the time when the covering of the cable 8 is in a compressed state. Consequently, when the cable 8 is pressed into the gap between the framing lateral portion 14 and the cable holding member 13; the covering of the cable 8 gets compressed and elastically-deformed, so that the cable 8 becomes smaller in diameter than the normal diameter and goes into the gap between the framing lateral portion 14 and the cable holding member 13 in a sandwiched and held manner without falling out. Thus, the cable 8 can be directly held with only the framing member 6, thereby eliminating the need for using the banding band 17. Moreover, by making the corner portion 13a at the leading end of the cable holding member 13 to be R-shaped, the cable 8 can be pressed in easily and can be prevented from getting damaged. Besides, during photovoltaic cell module installation, while performing the fixing task using screws or the like once the photovoltaic cell module 1 is mounted on a mount, there is an advantage that the cable 8 can be temporarily sandwiched and held in the framing member 6 so that it does not interfere with the fixing task.

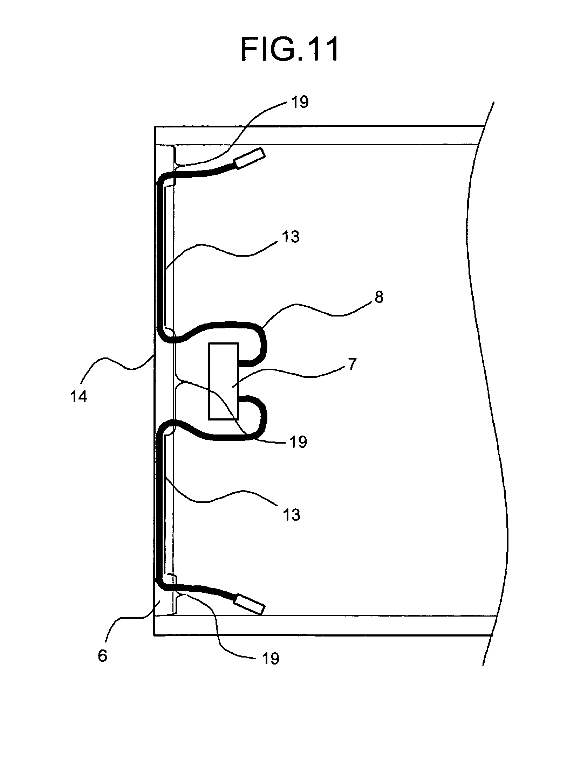

FIG. 10 and FIG. 11 are a side view of the framing member of the photovoltaic cell module and a rear view of the photovoltaic cell module, respectively, according to the second embodiment of the present invention. In FIG. 10 and 11, in order to pass the cable 8 in between the cable holding member 13 and the framing lateral portion 14, notches 19 having width equal to or greater than the cable diameter are formed in some portions such as at ends in the longitudinal direction or at the intermediate portion of the cable holding member 13. Consequently, the cable 8 coming out of the terminal box 7 extends up to the cable holding member 13 along the rear side of the photovoltaic cell panel 5 without drooping in the perpendicular direction to the photovoltaic cell panel 5. Hence, the cable 8 can be passed through the notches 19 and sandwiched and held in between the cable holding member 13 and the framing lateral portion 14. Moreover, if the width of the notches 19 is assumed to be the necessary dimension for bending the cable 8 at a predetermined R and passing it through the notches 19, then wiring of the cable 8 becomes even easier. The notches 19 are also effective in the configuration illustrated in FIG. 8 according to the first embodiment.

### Third embodiment

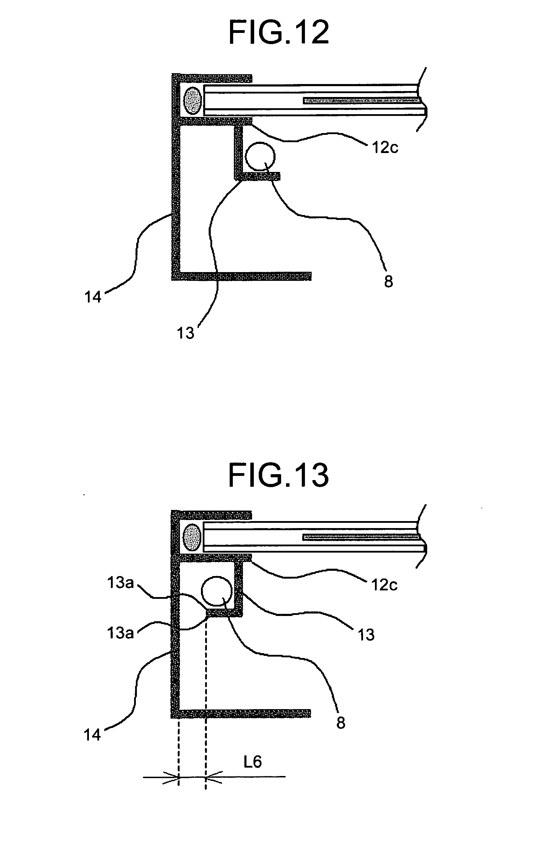

FIG. 12 is a cross-sectional view of the framing member of the photovoltaic cell module according to a third embodiment of the present invention. The following explanation is given with reference to FIG. 12. In the third embodiment, it is assumed that the cable holding member 13, which extends from the panel holding rear face 12c in a substantially parallel manner to the framing lateral portion 14, bends in the opposite direction to the framing lateral portion 14 at a position at which the distance from the panel holding rear face 12c becomes equal to or greater than the diameter of the cable 8, and then extends in a substantially parallel manner to the photovoltaic cell panel 5. Besides, the distance from the position at which the cable holding member 13 bends up to the leading edge of the cable holding member 13 is equal to or greater than the diameter of the cable 8. In such a configuration, upon installing the photovoltaic cell module 1, the cable 8 can be placed on the horizontally-bent portion of the cable holding member 13. That makes it easier to fasten the cable 8 using the banding band 17.

### Fourth embodiment

FIG. 13 is a cross-sectional view of the framing member of the photovoltaic cell module according to a fourth embodiment of the present invention. The following explanation is given with reference to FIG. 13. In the fourth embodiment, it is assumed that the cable holding member 13, which extends from the panel holding rear face 12c in a substantially parallel manner to the framing lateral portion 14, bends toward the framing lateral portion 14 at the position at which the distance from the panel holding rear face 12c becomes equal to or greater than the diameter of the cable 8, and then extends toward the framing lateral portion 14. Besides, a facing distance L6 between the leading end of the cable holding member 13 and the framing lateral portion 14 is kept equal to or smaller than the diameter of the cable 8. In this regard, however, the facing distance L6 is not kept extremely small as compared to the diameter of the cable 8, but is kept about equal to the diameter at the time when the covering of the cable 8 is in a compressed state.

Consequently, when the cable 8 is pressed into the gap between the framing lateral portion 14 and the leading end of the cable holding member 13; the covering of the cable 8 gets compressed and elastically-deformed, so that the cable 8 becomes smaller in diameter than the normal diameter and goes into the gap between the framing lateral portion 14 and the leading end of the cable holding member 13, and enters a space formed between the framing lateral portion 14, the cable holding member 13, and the panel holding rear face 12c. Besides, once gone inside, the cable 8 does not fall out from the gap between the framing lateral portion 14 and the leading end of the cable holding member 13. Meanwhile, the cable 8 is not fastened inside the space formed between the framing lateral portion 14, the cable holding member 13, and the panel holding rear face 12c. Hence, while performing the wiring task, adjustment of the wiring route by pulling out or pressing in the cable 8 becomes easier. In this case too, the banding band 17 may not be needed as the situation demands. Moreover, in the fourth embodiment too, it is an effective measure to make use of the notches 19 illustrated in FIG. 10 and FIG. 11. Furthermore, by making the corner portion 13a at the leading end of the cable holding member 13 to be R-shaped, it becomes easier to press in the cable 8 and to prevent the cable 8 from getting damaged.

Meanwhile, generally, the cross-sectional shape of the framing member is different in the short side direction of the photovoltaic cell module and in the long side direction of the photovoltaic cell module. With respect to the task of cable fastening, it is sufficient that at least one side of the framing member has the cross-sectional shape according to the present invention.

### Reference Signs List

- 1: PHOTOVOLTAIC CELL MODULE
- 2: PHOTOVOLTAIC CELL
- 3: FRONT FACE COVER
- 4: REAR FACE COVER
- 5: PHOTOVOLTAIC CELL PANEL
- 6: FRAMING MEMBER
- 8: CABLE
- 11: OPENING (PASS-THROUGH SLOT)
- 12: PANEL HOLDING PORTION
- 12c: PANEL HOLDING REAR FACE
- 13: CABLE HOLDING MEMBER
- 14: FRAMING LATERAL PORTION
- 19: NOTCH

## Claims

1. A photovoltaic cell module comprising:
a flat-plate-like photovoltaic cell panel including
a photovoltaic cell;
a front face cover that covers a light-receiving surface of the photovoltaic cell; and
a rear face cover that covers a rear face of the photovoltaic cell;
a framing member that has a cross-sectionally U-shaped panel holding portion which sandwiches and holds an outer periphery of the photovoltaic cell panel from a front side and a rear side of the photovoltaic cell panel, and
a cable that is used to draw out electric power from the photovoltaic cell, wherein
the photovoltaic cell module further comprises a cable holding member that is capable of holding the cable and is arranged on a panel holding rear face, which faces the rear side of the photovoltaic cell panel, of at least one side of the framing member.

2. The photovoltaic cell module according to claim 1, wherein
the framing member has a framing lateral portion that is vertically arranged on the panel holding rear face in the direction away from the rear side of the photovoltaic cell panel and that constitutes an outer envelope of the framing member,
the cable holding member has a rib that is vertically arranged in a substantially parallel manner to the framing lateral portion with a predetermined gap from the framing lateral portion, the rib being positioned on the panel holding rear face inward of a position where the framing lateral portion is vertically arranged, and
a protruding distance of the rib, which is a distance from the panel holding rear face to a front end edge of the rib, is shorter than a protruding distance of the framing lateral portion from the panel holding rear face.

3. The photovoltaic cell module according to claim 1, wherein the cable holding member has a pass-through slot opened thereon so as to enable passage of a fastening member for fastening the cable.

4. The photovoltaic cell module according to claim 2, wherein
a facing distance between the framing lateral portion and the cable holding member is equal to or smaller than the diameter of the cable not in an elastically-deformed condition and is large enough to house the cable that is elastically-deformed due to compression of a cable covering diameter.

5. The photovoltaic cell module according to claim 2, wherein,
at a position at which the distance from the panel holding rear face is equal to or greater than the diameter of the cable, the leading end of the cable holding member bends either in a direction toward the framing lateral portion or in an opposite direction to the framing lateral portion.

6. The photovoltaic cell module according to claim 5, wherein,
at the position at which the distance from the panel holding rear face is equal to or greater than the diameter of the cable, the leading end of cable holding member bends in the direction toward the framing lateral portion, and
a leading edge of the bending portion faces the framing lateral portion with a gap therebetween, through which the cable that is elastically-deformed due to compression of the cable covering diameter is capable of passing and the width of which is equal to or smaller than the diameter of the cable not in an elastically-deformed condition.

7. The photovoltaic cell module according to claim 1, wherein the cable holding member has a notch formed thereon for enabling passage of the cable in and out of the cable holding member.
